# EUROPEAN PATENT APPLICATION

(11) **EP 4 248 787 A1**
(43) Date of publication of application: **27.09.2023**
(21) Application number: 20966885.4
(22) Date of filing: 23.12.2020
(51) Int. Cl.: A43B 13/04, B29D 35/12

(54) **CUSHIONING MEMBER AND SOLE FOR SHOE**

(71) Applicant: ASICS Corporation, Kobe-shi Hyogo 650-8555 (JP)
(72) Inventor: SAWADA, Daisuke, Kobe-shi, Hyogo 650-8555 (JP)
(74) Representative: TBK
(86) International application number: PCT/JP2020/048214
(87) International publication number: WO 2022/137394

(57) **Abstract**

A method of producing a cushioning member (2) for a shoe, including a foamed area (11) and a non-foamed area (21), wherein the cushioning member (2) is formed by filling a mold with an unfoamed foamable material (10) and a non-foamable material (20) in a mold (3) and molding, and the foamable material (10) forms the foamed area by foaming after the mold (3) is filled, and the non-foamable material (20) forms the non-foamed area (21).

## Description

### TECHNICAL FIELD

The present disclosure relates to a cushioning member and a sole for a shoe.

### BACKGROUND ART

In order to reduce the weight of the sole of a shoe, conventionally, a sole comprising a foamed area and a non-foamed area is made by blending a foamed material (foamed particles, etc.) with a non-foamable material, filling a mold with the materials, and molding (PTL 1: WO 2019/073607, PTL 2: Japanese National Patent Publication No. 2014-521418). However, since a shear stress is generated in the vicinity of the interface between the foamed area and the non-foamed area when an external force is applied, there is a problem of the reduced durability of the sole.

### CITATION LIST

### PATENT LITERATURE

PTL 1: WO 2019/073607
PTL 2: Japanese National Patent Publication No. 2014-521418

### SUMMARY OF INVENTION

### TECHNICAL PROBLEM

In view of the problems described above, it is an object of the present disclosure to provide a cushioning member for a shoe having a light weight due to the foamed area and improved durability.

### SOLUTION TO PROBLEM

A method of producing a cushioning member for a shoe, comprising a foamed area and a non-foamed area, wherein
the cushioning member is formed by filling a mold with a foamable material that is unfoamed and a non-foamable material and molding, and
the foamable material forms the foamed area by foaming after the mold is filled, and the non-foamable material forms the non-foamed area.

A cushioning member for a shoe, comprising a foamed area and a non-foamed area, wherein
an intervening layer separate from the foamed area and the non-foamed area is not present at an interface between the foamed area and the non-foamed area.

### ADVANTAGEOUS EFFECTS OF INVENTION

According to the present disclosure, because weight is reduced by the foamed area and there is no clear interface between the foamed area and the non-foamed area, shear stress generated in the vicinity of the interface when an external force is applied is suppressed, which enables a cushioning member having improved durability to be provided.

### BRIEF DESCRIPTION OF DRAWINGS

Fig. 1(a) is a diagram for illustrating a method of producing a cushioning member of Example 1, and Fig. 1(b) is a photograph showing the surface of the cushioning member of Example 1.
Fig. 2(a) is a diagram for illustrating a method of producing a cushioning member of Example 2, and Fig. 2(b) is a photograph showing the surface of the cushioning member of Example 2.
Fig. 3 is a schematic diagram for illustrating variations in the placement of a foamed area and a non-foamed area.
Fig. 4 is a schematic projection diagram for illustrating an example of the placement of the foamed area, with Fig. 4(a) being a top projection view and Fig. 4(b) being a side projection view.
Fig. 5 is a photograph of the vicinity of the interface between the foamed area and the non-foamed area of the cushioning member of Sample 1.
Fig. 6 is a photograph of the vicinity of the interface between the foamed area and the non-foamed area of the cushioning member of Sample 2.
Fig. 7 is a diagram illustrating a cross-sectional shape of a design portion of Sample 3 and Sample 4 (comparative control).

### DESCRIPTION OF EMBODIMENTS

Embodiments of the present disclosure will now be described in detail. It is noted that in the drawings, the same reference numerals denote the same or corresponding parts.

### <Cushioning member for a shoe>

A cushioning member for a shoe of this embodiment comprises a foamed area and a non-foamed area.

The foamed area is an area of the cushioning member that contains independent air bubbles (air bubbles trapped in a resin). Moreover, the foamed area is an area formed by the foamable material in the production method described later.

The non-foamed area is an area of the cushioning member that does not contain independent air bubbles. As used herein, "does not contain independent air bubbles" means that the non-foamed area does not substantially contain independent air bubbles, and a small amount of air bubbles such as air bubbles that are accidentally mixed in during the production process may be contained within a range in which the effects of the present disclosure are exhibited. Moreover, the non-foamed area is an area formed by the non-foamable material in the production method described later.

The cushioning member of this embodiment is characterized in that an intervening layer separate from the foamed area and the non-foamed area is not present at the interface between the foamed area and the non-foamed area. Examples of the intervening layer include a bonding layer consisting of a bonding agent or the like for bonding the foamed area and the non-foamed area. Since the cushioning member of this embodiment does not have an intervening layer between the foamed area and the non-foamed area, shear stress generated in the vicinity of the interface when an external force is applied is suppressed, and durability is improved. As a result, it is possible to provide a highly durable cushioning member in which peeling or the like between the foamed area and the non-foamed area is unlikely to occur.

Further, the cushioning member of this embodiment is characterized in that a clear interface (a clear interface like when a non-foamed raw material and a foamed raw material are joined as a separated member) is not present between the foamed area and the non-foamed area. Since the cushioning member of this embodiment does not have a clear interface between the foamed area and the non-foamed area, shear stress generated in the vicinity of the interface when an external force is applied is suppressed, and durability is improved. From this point as well, it is possible to provide a highly durable cushioning member in which peeling or the like between the foamed area and the non-foamed area is unlikely to occur.

As used herein, "a clear interface is not present between the foamed area and the non-foamed area" means, for example, a state in which a clear interface is not present between the foamed area and the non-foamed area in any of the cross sections in the thickness direction, width direction, front-back direction, diagonal direction or the like of the cushioning member (shoe sole, etc.).

For example, the non-foamed area and the foamed area are bonded at their interface by thermal fusing or chemical cross-linking. That is, the non-foamed area and the foamed area are bonded without using a bonding agent or the like. In addition, in a case in which the mold is filled with a foamed material and a non-foamable material as in the past, melting the foamed particles causes them to shrink significantly, and so it was difficult to cause the interface between the foamed particles and the non-foamable material to fuse together.

The ratio of the foamed area in the cushioning member is not particularly limited, and is set according to the various characteristics required for the cushioning member. When the cushioning member is a shoe sole, the ratio of the foamed area in the cushioning member is, for example, from 50 to 90% by volume. When the foamed area is 50% by volume or less, the weight of the sole increases. When the foamed area is 90% by volume or more, the effects of the non-foamed area are less likely to be exhibited.

The volume ratio of the air bubbles in the foamed area is, for example, from 30 to 90% by volume.

The non-foamed area may be colored or colorless, transparent or opaque. The foamed area may also be colored or colorless, but is usually opaque because it contains air bubbles.

In addition, in order to suppress shear stress generated at the interface between the foamed area and the non-foamed area, it is preferable that the foamed area and the non-foamed area are made of materials having the same or similar structure. This is because, in this case, it is more certain that a clear interface is not present between the foamed area and the non-foamed area. Moreover, in this case, the specific gravity (density) of the non-foamed area is usually larger than the specific gravity of the foamed area. Further, in this case, the average specific gravity of the whole cushioning member is greater than the specific gravity of the foamed area and smaller than the specific gravity of the non-foamed area.

### <Method of producing a cushioning member for a shoe>

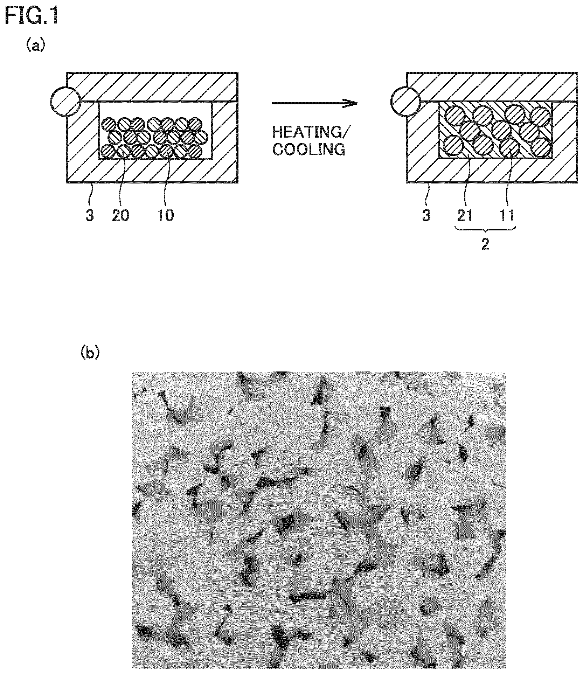

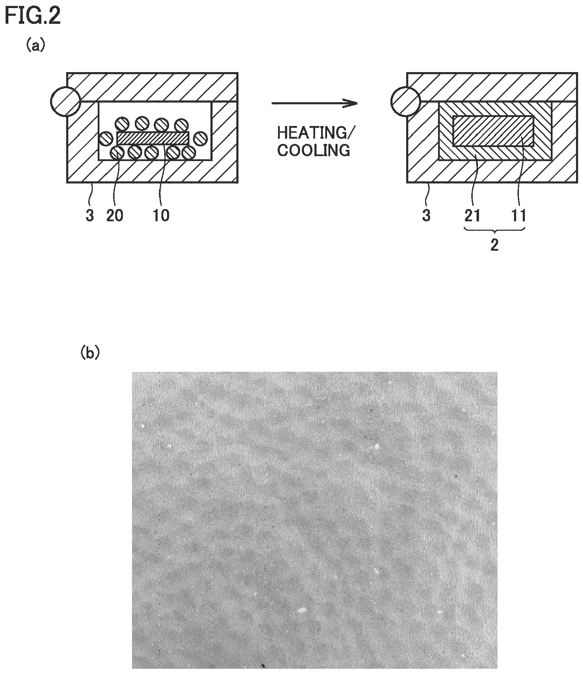

A method of producing a cushioning member for a shoe of this embodiment is now described with reference to Figs. 1(a) and 2(a).

In the production method of this embodiment, the cushioning member consisting of a foamed area 11 and a non-foamed area 21 is formed by filling a mold 3 with an unfoamed foamable material 10 and a non-foamable material 20 and molding. Here, the unfoamed foamable material 10 forms the foamed area 11 by foaming after the mold 3 is filled with the unfoamed foamable material, and the non-foamable material 20 forms the non-foamed area 21.

During the molding, for example, the foamable material 10 and the non-foamable material 20 in the mold 3 are heated and then cooled to make the cushioning member. The made cushioning member is removed from the mold 3. The heating temperature is, for example, from 100 to 200°C, and the heating time is, for example, from 5 to 30 minutes. The cooling is performed, for example, by water cooling, and the cooling time is, for example, from 3 to 20 minutes.

As illustrated in Fig. 1(a), the foamable material 10 and the non-foamable material 20 with which the mold 3 is filled may both be in particle form.

Further, as illustrated in Fig. 2(a), the foamable material 10 with which the mold 3 is filled may be plate-like, the non-foamable material 20 may be in particle form, and the non-foamable material 20 in particle form may be arranged around the plate-like foamable material 10 in the mold 3.

Thus, the shape and the placement of each of the foamable material 10 and the non-foamable material 20 can be appropriately selected according to the characteristics and the like required for the cushioning member.

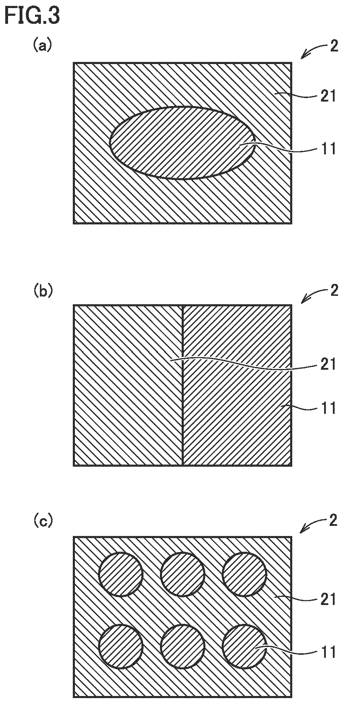

The placement of the foamed area 11 and the non-foamed area 21 can also be selected in various ways. Examples include the variations in the placement of the foamed area 11 and the non-foamed area 21 illustrated in Figs. 3(a) to 3(c).

### (Foamable material)

The foamable material is a material for forming the above-described foamed area in the cushioning member, and has foaming properties. The foamable material preferably contains various known foaming agents.

The foamable material preferably contains a thermoplastic elastomer and a foaming agent.

Examples of the thermoplastic elastomer used in the foamable material include thermoplastic materials such as a styrene elastomer, an olefin elastomer, an ethylene-vinyl acetate copolymer (EVA) elastomer, a urethane elastomer, a polyamide elastomer, and a polyester elastomer, and rubber-based materials.

Examples of the styrene elastomer include a styrene-ethylene/butylene-styrene block copolymer (SEBS), a styrene-ethylene/ethylene/propylene-styrene block copolymer (SEEPS), a styrene-butadiene rubber (SBS), and a styrene-isoprene-styrene block copolymer (SIS).

Examples of the olefinic elastomer include polyethylene (e.g., linear low-density polyethylene (LLDPE), high-density polyethylene (HDPE)), polypropylene, an ethylene-propylene copolymer, a propylene-1-hexene copolymer, a propylene-4-methyl-1-pentene copolymer, a propylene-1-butene copolymer, an ethylene-1-hexene copolymer, an ethylene-4-methyl-pentene copolymer, an ethylene-1-butene copolymer, a 1-butene-1-hexene copolymer, 1-butene-4-methyl-pentene, an ethylene-methacrylic acid copolymer, an ethylene-methyl methacrylate copolymer, an ethylene-ethyl methacrylate copolymer, an ethylene-butyl methacrylate copolymer, an ethylene-methyl acrylate copolymer, an ethylene-ethyl acrylate copolymer, an ethylene-butyl acrylate copolymer, a propylene-methacrylic acid copolymer, a propylene-methyl methacrylate copolymer, a propylene-ethyl methacrylate copolymer, a propylene-butyl methacrylate copolymer, a propylene-methyl acrylate copolymer, a propylene-ethyl acrylate copolymer, a propylene-butyl acrylate copolymer, an ethylene-vinyl acetate copolymer (EVA), and a propylene-vinyl acetate copolymer polyolefin.

Examples of the urethane elastomer include a polyester polyurethane and a polyether polyurethane.

Examples of the polyamide elastomer include polyamide 6, polyamide 11, polyamide 12, polyamide 66, and polyamide 610.

Examples of the polyester elastomer include polyethylene terephthalate and polybutylene terephthalate.

Examples of rubber-based materials include diene rubbers such as natural rubber (NR), isoprene rubber (IR), butadiene rubber (BR), and chloroprene (CR); diene copolymer rubbers such as styrene-butadiene rubber (SBR), styrene-butadiene-styrene rubber (SBSR), acrylonitrile butadiene rubber (NBR), a styrene isoprene copolymer (SIR), and butyl rubber (IIR); and non-diene rubbers such as an ethylene/α-olefin copolymer rubber containing an ethylene unit and a unit formed from an α-olefin having 3 or more carbon atoms, urethane rubber, acrylic rubber, and silicone rubber. The copolymer rubbers may be a block copolymer or a random copolymer. The other rubbers described above may be used singly or in combinations of two or more.

Examples of the foaming agent include chemical foaming agents and expanding foaming agents.

Examples of the chemical foaming agent include pyrolytic chemical foaming agents. Examples of pyrolytic chemical foaming agents include organic foaming agents such as azodicarbonamide (ADCA), dinitrosopentamethylenetetramine (DPT), and p-p'-oxybisbenzenesulfonylhydrazide (OBSH), and inorganic foaming agents (baking soda foaming agents) based on sodium bicarbonate.

Examples of the expanding foaming agent include microcapsule-type expanding foaming agents.

When the foamable material contains a thermoplastic elastomer and a foaming agent, the amount of the foaming agent added based on 100 parts by mass of the thermoplastic elastomer is preferably from 0.5 to 50 parts by mass (phr), and more preferably from 1 to 30 parts by mass (phr).

In addition, within a scope in which the effects of the present disclosure are exhibited, the foamable material may contain materials other than those described above, and may contain additives such as a cross-linking agent, an oil, a plasticizer, a reinforcing agent, a cross-linking aid, a filler, and a processing aid.

The foamable material preferably contains a cross-linking agent. When a cross-linking agent is contained, the mechanical strength of the foamed area can be increased. Examples of the cross-linking agent include peroxide cross-linking agents and sulfur cross-linking agents. Examples of peroxide cross-linking agents include DCP (dicumyl peroxide) and BIPB (di-(tert-butylperoxyisopropyl)benzene).

When the foamable material contains a thermoplastic elastomer, a foaming agent, and a cross-linking agent, the amount of the cross-linking agent added based on 100 parts by mass of the thermoplastic elastomer is preferably from 0.01 to 20 parts by mass, and more preferably from 0.1 to 10 parts by mass.

The foamable material preferably also contains an oil. Examples of the oil include paraffin oil, naphthenic oil, aromatic oil, and other plant-derived oils. The content of the oil in the foamable material is preferably from 5 to 300% by mass.

The foaming ratio of the foamed area to the foamable material ([specific gravity of foamable material before foaming]/[specific gravity of foamed area after foaming]) is preferably from 1.5 to 10.

### (Non-foamable material)

The non-foamable material is a material for forming the above-described non-foamed area in the cushioning member, and does not have foaming properties.

The non-foamable material preferably contains a thermoplastic elastomer.

Examples of the thermoplastic elastomer used in the non-foamable material include thermoplastic materials such as a styrene elastomer, an olefin elastomer, an ethylene-vinyl acetate copolymer (EVA) elastomer, a urethane elastomer, a polyamide elastomer, and a polyester elastomer, and rubber-based materials.

Examples of the styrene elastomer include a styrene-ethylene/butylene-styrene block copolymer (SEBS), a styrene-ethylene/ethylene/propylene-styrene block copolymer (SEEPS), a styrene-butadiene rubber (SBS), and a styrene-isoprene-styrene block copolymer (SIS).

Examples of the olefinic elastomer include polyethylene (e.g., linear low-density polyethylene (LLDPE), high-density polyethylene (HDPE)), polypropylene, an ethylene-propylene copolymer, a propylene-1-hexene copolymer, a propylene-4-methyl-1-pentene copolymer, a propylene-1-butene copolymer, an ethylene-1-hexene copolymer, an ethylene-4-methyl-pentene copolymer, an ethylene-1-butene copolymer, a 1-butene-1-hexene copolymer, 1-butene-4-methyl-pentene, an ethylene-methacrylic acid copolymer, an ethylene-methyl methacrylate copolymer, an ethylene-ethyl methacrylate copolymer, an ethylene-butyl methacrylate copolymer, an ethylene-methyl acrylate copolymer, an ethylene-ethyl acrylate copolymer, an ethylene-butyl acrylate copolymer, a propylene-methacrylic acid copolymer, a propylene-methyl methacrylate copolymer, a propylene-ethyl methacrylate copolymer, a propylene-butyl methacrylate copolymer, a propylene-methyl acrylate copolymer, a propylene-ethyl acrylate copolymer, a propylene-butyl acrylate copolymer, an ethylene-vinyl acetate copolymer (EVA), and a propylene-vinyl acetate copolymer polyolefin.

Examples of the urethane elastomer include a polyester polyurethane and a polyether polyurethane.

Examples of the polyamide elastomer include polyamide 6, polyamide 11, polyamide 12, polyamide 66, and polyamide 610.

Examples of the polyester elastomer include polyethylene terephthalate and polybutylene terephthalate.

Examples of rubber-based materials include diene rubbers such as natural rubber (NR), isoprene rubber (IR), butadiene rubber (BR), and chloroprene (CR); diene copolymer rubbers such as styrene-butadiene rubber (SBR), styrene-butadiene-styrene rubber (SBSR), acrylonitrile butadiene rubber (NBR), a styrene isoprene copolymer (SIR), and butyl rubber (IIR); and non-diene rubbers such as an ethylene/a-olefin copolymer rubber containing an ethylene unit and a unit formed from an α-olefin having 3 or more carbon atoms, urethane rubber, acrylic rubber, and silicone rubber. The copolymer rubbers may be a block copolymer or a random copolymer. The other rubbers described above may be used singly or in combinations of two or more.

The thermoplastic elastomer used in the non-foamable material and the thermoplastic elastomer used in the foamable material are preferably elastomers having the same or similar structure. When this is the case, the foamed area and the non-foamed area can be easily thermally fused by the heating during molding in a mold.

The non-foamable material may contain materials other than those described above within a scope in which the effects of the present disclosure are exhibited, and may contain additives such as a cross-linking agent, an oil, a plasticizer, and a reinforcing agent.

The non-foamable material preferably contains at least one of an oil and a cross-linking agent. As the oil and the cross-linking agent, the same oils and cross-linking agents as those described for the foamable material can be used.

In the production method of this embodiment, it is preferable to suppress excessive shrinkage of the material with which the mold is filled. When a sole is made as in the past by blending a foamed material (foamed particles, etc.) with a non-foamable material and filling a mold with the materials, because the foamed material such as foamed particles shrinks as the mold temperature rises, there is a problem with design and shape properties. In contrast, the cushioning member of the present disclosure is molded by foaming and expanding a foamable material within the mold, and therefore does not shrink from its original volume. Thus, the production method of this embodiment has high design and shape properties because the foamable material expands so as to fill the cavity in the mold. In addition, since the foamed area and the non-foamed area have a high degree of positional freedom, in a complexly designed area, it is possible to obtain a cushioning member that has different characteristics for each area.

It should be noted that in the production method of the cushioning member of this embodiment, because the mold is filled with an unfoamed foamable material, there is the advantage that the step of forming foamed particles in advance as in the prior art can be omitted.

Further, the production method of the cushioning member of this embodiment also has the advantage that existing equipment can be used. In contrast, when a cushioning member such as a sole is molded using foamed particles, it is necessary to fill the mold with the foamed particles in the mold, which requires a special mold, a system for filling the foamed particles, and the like.

In the production method of this embodiment, the foamed material (foamed area) and the non-foamed material (non-foamed area) are both melted and fused at the interface during the molding in the mold. Therefore, the production method of this embodiment has the advantage of not requiring a separate step of bonding the foamed material and the non-foamed material.

### <Sole>

The present disclosure also relates to a sole (shoe bottom) consisting of any of the above-described cushioning members.

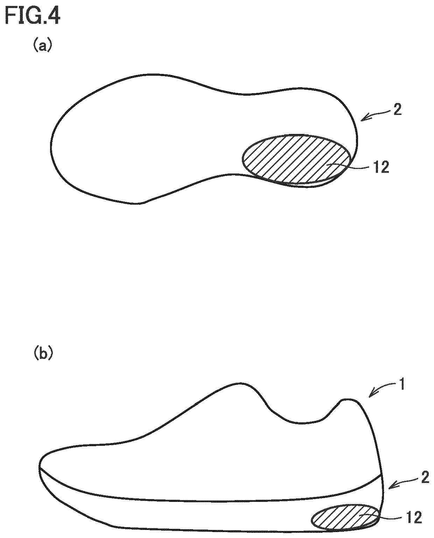

The volume ratio occupied by the foamed area may differ depending on the position in the sole. For example, as illustrated in Fig. 4, a sole (compression member) 2 of a shoe 1 may be provided with a foamed area on one of the left and right sides of the heel in order to suppress pronation. For example, in the case of overpronation, as illustrated in Fig. 4, it is possible to effectively obtain a cushioning effect by providing the non-foamed area 21 on the inner side where a high load is applied (by reducing the ratio of the foamed area).

Moreover, it is preferable to provide the non-foamed material (non-foamed area) at a position where it is desired to suppress excessive deformation. This is because a non-foamed material generally has a smaller amount of deformation to an external force than a foamed material, and has better compression durability.

In addition, in this embodiment, it is possible to achieve a design in which the interface between the foamed area and the non-foamed area is inclined.

In addition, since a separate step of bonding the foamed material and the non-foamed material is not required, various characteristics required for shoe parts (sole, etc.) can be realized by one part.

The above-described cushioning member for a shoe can be suitably used for a part such as a sole that makes up a shoe. The above-described cushioning member for a shoe has excellent design and shape properties, and is therefore also useful for enhancing the design and shape properties of a shoe sole and the like.

### Examples

The present disclosure will now be explained in more detail with the following Examples, but the present disclosure is not limited to these.

### (Example 1)

In this Example, a cushioning member was made by the production method illustrated in Fig. 1(a).

First, 100 parts by mass of SEEPS (SEPTON 4033, manufactured by Kuraray Co., Ltd.), which is a styrene elastomer, and 150 parts by mass of paraffin oil (Diana Process Oil PW 380, manufactured by Idemitsu Kosan Co., Ltd.) were kneaded at 180°C using a twin-screw extruder kneader, and the resulting mixture was molded to make a plate-like (solid) non-foamable material. This non-foamable material was cut into 5 mm squares to make particles made of the non-foamable material.

Then, 100 parts by mass of SEEPS (SEPTON 4033, manufactured by Kuraray Co., Ltd.), which is a styrene elastomer, 150 parts by mass of paraffin oil (Diana Process Oil PW 380, manufactured by Idemitsu Kosan Co., Ltd.), 12.5 parts by mass of an expanding foaming agent (Expancell DU80, manufactured by Japan Fillite Co., Ltd.), 2.5 parts by mass of stearic acid (Stearic Acid 50S, manufactured by New Japan Chemical Co., Ltd.) as a processing aid, and 12.5 parts by mass of calcium carbonate (light calcium carbonate manufactured by Maruo Calcium Co., Ltd.) as a filler were kneaded at 120°C with an 8-inch open roll, and the resulting mixture was molded to make a plate-like (solid) foamable material. This foamable material was cut into 5 mm squares to make particles made of the foamable material.

Next, as illustrated in Fig. 1(a), a cushioning member consisting of a foamed area 11 and a non-foamed area 21 was formed by filling a mold 3 with a foamable material 10 (particles) and a non-foamable material 20 (particles). The mold is a flat plate mold having a cavity with a size of 250 mm × 130 mm × 12 mm (volume: 390 cm³). The mold was filled with the foamable material and the non-foamable material in a mass ratio of 1:1. The total amount of material with which the mold is filled is approximately 170 g, and the total specific gravity of the molded product (cushioning member) is calculated to be about 0.45. It is noted that the specific gravity of the foamed area is considered to be about 0.2.

During the molding, the foamable material 10 and the non-foamable material 20 in the mold 3 were heated and then cooled to make a cushioning member. The made cushioning member is removed from the mold 3. Moreover, during the molding, the heating temperature is 160°C and the heating time is 15 minutes. The cooling was performed by water cooling and the cooling time was 10 minutes.

A top view photograph of the cushioning member of Example 1 made as described above is illustrated in Fig. 1(b). In this Example, the non-foamed area was transparent, and so although the shape of the foamed area was observed, it can be seen that the foamed area was a matrix derived from the shape of the particles of the foamable material with which the mold is dispersedly filled.

### (Example 2)

In this Example, the mold was filled with the foamable material to mold the material into a plate shape having a thickness of 2 mm, and a cushioning member was made by the production method illustrated in Fig. 2(a). The cushioning member of Example 2 was made in the same manner as in Example 1 except for the above points.

A top view photograph of the cushioning member of Example 2 made as described above is illustrated in Fig. 2(b). In this Example, the non-foamed area was transparent, and so although it was possible to see through the shape of the surface of the foamed area, it can be seen that the surface of the foamed area had asperities derived from the shape of the particles of the foamable material with which the mold is filled.

### <Confirmation of the interface between the foamed area and the non-foamed area>

The state of the interface between the foamed area and the non-foamed area was observed for the cushioning member of Sample 1 (the same cushioning member as in Example 1) and the cushioning member of the following Sample 2 (comparative control).

### [Sample 2]

As a comparative control, a cushioning member (Sample 2) having a foamed area and a non-foamed area was made by filling a mold with foamed particles obtained by foaming an olefin elastomer with a foaming agent and a non-foamable material, and molding.

The non-foamable material consists of 100 parts by mass of SEEPS (SEPTON 4033, manufactured by Kuraray Co., Ltd.), which is a styrene elastomer, and 150 parts by mass of paraffin oil (Diana Process Oil PW380, manufactured by Idemitsu Kosan Co., Ltd.). The specific gravity of the whole Sample 2 is 0.60.

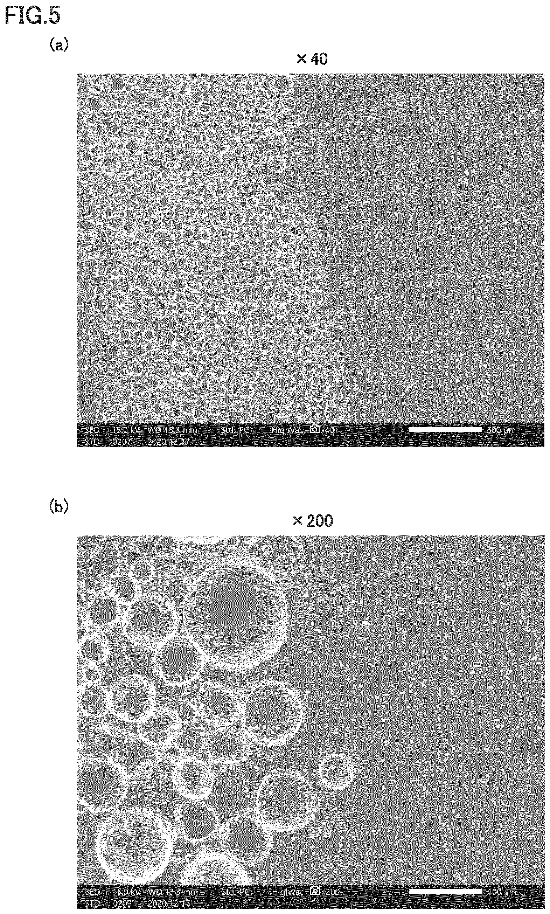

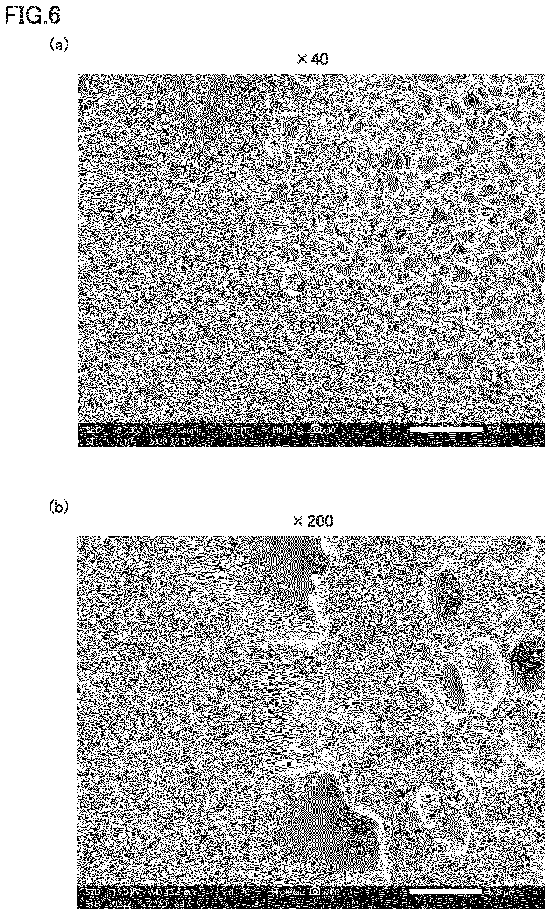

For the cushioning members of Sample 1 and Sample 2 (comparative control), a cross section across the interface between the foamed area and the non-foamed area was prepared. A photograph of the vicinity of the interface between the foamed area and the non-foamed area taken using a scanning electron microscope (JCM-7000, manufactured by JEOL Ltd.) is shown in Fig. 5 (Sample 1) and Fig. 6 (Sample 2). The image magnification of Figs. 5(a) and 6(a) is 40 times, and the image magnification of Figs. 5(b) and 6(b) is 200 times.

As shown in Fig. 5, in the cushioning member of Sample 1 corresponding to the present disclosure, no clear interface is observed between the foamed area (left side) and the non-foamed area (right side). This is thought to be because the foamed area and the non-foamed area were fused together during molding. In addition, an intervening layer (bonding layer) is not confirmed to be present between the foamed area and the non-foamed area.

On the other hand, as shown in Fig. 6, in the cushioning member of Sample 2, which corresponds to the prior art, an interface is confirmed to be present between the foamed area (right side) and the non-foamed area (left side). Further, the formation of air bubbles is confirmed in the vicinity of the interface. It is thought that this was because the foamed particles shrank during molding and voids were generated at the interface between the foamed area and the non-foamed area. As a result, it was difficult for the interface between the foamed particles and the non-foamable material to fuse together.

### <Evaluation of design and shape properties>

The cushioning members of the following Sample 3 and Sample 4 (comparative control) were evaluated for their design and shape properties.

### [Sample 3]

A mold was filled with particles made of an ethylene-vinyl acetate copolymer (EVA) containing 5 phr of an expanding foaming agent (Expancell DU80, manufactured by Japan Fillite Co., Ltd.). The mold is a flat plate mold having a cavity with a size of 250 mm × 130 mm × 12 mm (volume: 390 cm³). Further, a cylindrical recess with a diameter of 3 mm and a thickness of 1 mm is provided in part of the mold. The amount of the foamed particles with which the mold is filled was set to give a specific gravity of about 0.3 based on the volume of the mold cavity. The mold filled with the material was heated from normal temperature at 160°C for 15 minutes, then cooled with water for 10 minutes, and then the molded product (Sample 3) was removed from the mold.

### [Sample 4]

A mold was filled with foamed particles made of thermoplastic polyurethane

(TPU). A molded product (Sample 4) was obtained in the same manner as in Sample 3 except for this point.

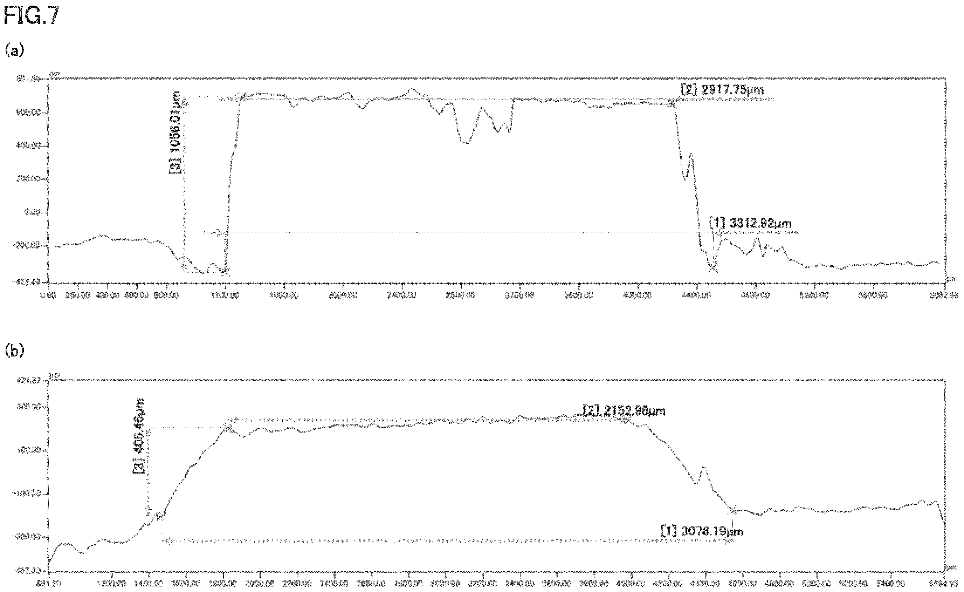

The design and shape properties of the molded products of Sample 3 and Sample 4 (comparative control) for a cylindrical recess with a diameter of 3 mm and a thickness of 1 mm provided in part of the mold were evaluated. Specifically, the three-dimensional shape of the corresponding portion (design portion) of the molded product was evaluated using a one-shot 3D shape measuring machine (VR-3100, manufactured by KEYENCE Corporation). Fig. 7 shows the cross-sectional shape of the obtained three-dimensional shape in the height direction. Fig. 7(a) shows the cross-sectional shape of Sample 3, and Fig. 7(b) shows the cross-sectional shape of Sample 4.

As illustrated in Fig. 7(a), it can be seen that Sample 3 had a rectangularly shaped design cross section with a height of about 1 mm, and that the Sample 3 was filled with the material up to the end of the cylindrical design.

On the other hand, as illustrated in Fig. 7(b), it can be seen that Sample 4 had a design height of about 0.4 mm, the cylindrical outer peripheral portion was inclined, and the cylindrical recess of the mold was not sufficiently filled with the material.

From the above results, it can be seen that molding by filling the mold with the foamable material provides higher design and shape properties than molding by filling the mold with foamed particles.

### [Modes]

It will be understood by those skilled in the art that the plurality of exemplary embodiments described above are specific examples of the following modes.

A production method according to one aspect of the present disclosure is a method of producing a cushioning member for a shoe, comprising a foamed area and a non-foamed area, wherein
the cushioning member is formed by filling a mold with a foamable material that is unfoamed and a non-foamable material and molding, and
the foamable material forms the foamed area by foaming after the mold is filled with the foamable material, and the non-foamable material forms the non-foamed area.

According to this production method, because a cushioning member that does not have an intervening layer or a clear interface between the foamed area and the non-foamed area can be obtained, the shear stress generated in the vicinity of the interface when an external force is applied is suppressed, and the durability of the cushioning member is improved.

The foamable material may comprise a thermoplastic elastomer and a foaming agent.

The foaming agent may be a chemical foaming agent or an expanding foaming agent.

The non-foamable material may comprise a thermoplastic elastomer.

A cushioning member for a shoe according to one aspect of the present disclosure comprises a foamed area and a non-foamed area, and is manufactured by the above production method.

This cushioning member is produced by the production method described above, and therefore does not have an intervening layer or a clear interface between the foamed area and the non-foamed area. As a result, the shear stress generated in the vicinity of the interface when an external force is applied is suppressed, and the durability of the cushioning member is improved.

Further, a cushioning member for a shoe according to one aspect of the present disclosure comprises a foamed area and a non-foamed area, wherein an intervening layer separate from the foamed area and the non-foamed area is not present at an interface between the foamed area and the non-foamed area.

With this cushioning member, because an intervening layer is not present between the foamed area and the non-foamed area, the shear stress generated in the vicinity of the interface when an external force is applied is suppressed, and durability is improved. As a result, it is possible to provide a highly durable cushioning member in which peeling or the like between the foamed area and the non-foamed area is unlikely to occur.

Further, in a cushioning member for a shoe according to one aspect of the present disclosure, a clear interface is not present between the foamed area and the non-foamed area.

With this cushioning member, because there is no clear interface between the foamed area and the non-foamed area, the shear stress generated in the vicinity of the interface when an external force is applied is suppressed, and durability is improved. As a result, it is possible to provide a highly durable cushioning member in which peeling or the like between the foamed area and the non-foamed area is unlikely to occur.

Further, a sole according to one aspect of the present disclosure comprises the above-described cushioning member.

This sole has improved durability through the use of a highly durable cushioning member in which peeling or the like between the foamed area and the non-foamed area is unlikely to occur.

A volume ratio occupied by the foamed area may differ depending on a position in the sole.

In this mode, for example, a cushioning effect can be effectively obtained by reducing the ratio of the foamed area (increasing the ratio of the non-foamed area) at positions where a high load is applied within the sole.

### REFERENCE SIGNS LIST

1 shoe
10 foamable material
11 foamed area
20 non-foamable material
21 non-foamed area
2 cushioning member (sole)
3 mold

## Claims

1. A production method of producing a cushioning member for a shoe, comprising a foamed area and a non-foamed area, wherein
the cushioning member is formed by filling a mold with a foamable material that is unfoamed and a non-foamable material and molding, and
the foamable material forms the foamed area by foaming after the mold is filled with the foamable material, and the non-foamable material forms the non-foamed area.

2. The production method according to claim 1, wherein the foamable material comprises a thermoplastic elastomer and a foaming agent.

3. The production method according to claim 2, wherein the foaming agent is a chemical foaming agent or an expanding foaming agent.

4. The production method according to any one of claims 1 to 3, wherein the non-foamable material comprises a thermoplastic elastomer.

5. A cushioning member for a shoe, comprising a foamed area and a non-foamed area, wherein
the cushioning member is produced by the production method according to any one of claims 1 to 4.

6. A cushioning member for a shoe, comprising a foamed area and a non-foamed area, wherein
an intervening layer separate from the foamed area and the non-foamed area is not present at an interface between the foamed area and the non-foamed area.

7. The cushioning member for a shoe according to claim 6, wherein a clear interface is not present between the foamed area and the non-foamed area.

8. A sole comprising the cushioning member according to any one of claims 5 to 7.

9. The sole according to claim 8, wherein a volume ratio occupied by the foamed area differs depending on a position in the sole.
